# EUROPEAN PATENT SPECIFICATION

(11) **EP 3 304 519 B1**
(45) Date of publication and mention of the grant of the patent: **09.01.2019**
(21) Application number: 16730898.0
(22) Date of filing: 11.05.2016
(51) Int. Cl.: G08G 1/16, A01M 29/16

(54) **A METHOD FOR REGULATING A TRANSIT OF WILD ANIMALS ALONG A CROSSING PATHWAY OF A PUBLIC ROAD**
VERFAHREN ZUR REGELUNG DES DURCHZUGS VON WILDTIEREN ENTLANG EINES WEGES EINER ÖFFENTLICHEN STRASSE
PROCÉDÉ DE RÉGULATION DU TRANSIT D'ANIMAUX SAUVAGES LE LONG D'UNE VOIE DE CROISEMENT D'UNE VOIE PUBLIQUE

(30) Priority: 29.05.2015 IT UB20151314
(43) Date of publication of application: 11.04.2018
(73) Proprietor: Digitalbird di Buttieri Michele, 40069 Zola Predosa (BO) (IT)
(72) Inventor: BUTTIERI, Michele, 40069 Zola Predosa (BO) (IT)
(74) Representative: Dall'Olio, Christian
(86) International application number: PCT/IB2016/052689
(87) International publication number: WO 2016/193837

(56) References cited:
- DE-A1-102011 102 759
- JP-A- 2014 093 040
- US-A1- 2003 071 735
- US-A1- 2015 123 816

## Description

### FIELD OF THE INVENTION

The present invention relates to the technical sector concerning management of transit of wild animals along a pathway that crosses a public road.

### DESCRIPTION OF THE PRIOR ART

It is known that in extra-urban localities there is often the presence of wild animals, which live in the natural state among the vegetation, including for example wild boars, deer, ungulates and so on.

These wild animals habitually move along "pathways", which can sometimes cross public roadways at a relative crossing.

It is likely that a vehicle passing on the public road might coincide with an animal crossing the road on a pathway.

In this circumstance it is possible that the vehicle driver might not notice the animal crossing and might therefore not stop in time to avoid an impact with the animal.

It is also possible that an unexpected crossing by an animal might throw the vehicle driver brusquely off the road or involve other vehicles in arrival. The documents US 2003/071735 A1, DE 10 2011 102759 A1 and JP 2014 093040 A are illustrative of the state of the art in the detection and signalling of animal transit across a road.

### SUMMARY OF THE INVENTION

An aim of the present invention is to obviate the above-mentioned drawbacks by providing a method for regulating a transit of wild animals along a crossing pathway of a public road, which safeguards both the vehicle driver moving along the public road and the wild animal moving along the crossing pathway.

A further aim of the present invention is to provide a method for regulating transit of wild animals that does not alter the natural ecosystem and habits of the animals.

The above-mentioned aims are attained by a method for regulating the transit of wild animals along a crossing pathway of a public road, the pathway being habitually crossed by wild animals and crossing the public road at a crossing, comprising following operative steps:
- monitoring a portion of the pathway in proximity of the crossing, so as to detect a presence of a wild animal in proximity of the crossing;
- monitoring a portion of the public road in proximity of the crossing, for detecting a presence of at least a vehicle in proximity of the crossing and a travelling velocity thereof;
- allowing transit of the wild animal detected on the crossing if a vehicle presence is not detected in proximity of the crossing or alternatively if a presence of a vehicle is detected in proximity of the crossing travelling at a velocity that is lower than a predetermined limit value;
- prohibiting transit of the wild animal detected in proximity of the crossing if a presence is detected of a vehicle in proximity of the crossing having a velocity of higher than the predetermined limit value.

According to particular modes of actuation of the proposed method for regulating transit of wild animals comprises one or more of the following characteristics, considered singly or in combination:
- the step of prohibiting transit of the wild animal detected in proximity of the crossing is carried out by means of acoustic dissuaders located at the portion of the pathway in proximity of the crossing;
- prior to the step of enabling or prohibiting transit of the wild animal detected in proximity of the crossing, a step of signalling to a driver of the vehicle is included, advising of a closeness of the crossing, and a limit value of acceptable speed of passing the crossing;
- prior to the steps of allowing or prohibiting transit of the wild animal detected in proximity of the crossing, a step is included of signalling to the driver of the vehicle a presence of a wild animal in proximity of the crossing, so as to induce the driver to slow down to below the velocity limit value and facilitate the step of allowing the wild animal to transit on the crossing;
- following the step of signalling to the driver of the vehicle, a step is included of prohibiting transit of the vehicle on the portion of the public road in proximity of the crossing if the velocity of the vehicle is above the predetermined limit value;
- the step of prohibiting transit of the vehicle detected in proximity of the crossing is carried out by means signalling means located at the portion of the pathway in proximity of the crossing;
- the step of prohibiting transit of the vehicle detected in proximity of the crossing is carried out by automatic detecting means of the velocity of the vehicle located at the portion of the public road in proximity of the crossing;
- the steps of monitoring a portion of the public road and the pathway in proximity of the crossing are carried out by volumetric sensor means, preferably of an infrared type, located at the respective portion in proximity of the crossing;
- the steps of monitoring a portion of the public road and the pathway in proximity of the crossing are carried out by television cameras, preferably of an infrared type, located at the respective portion in proximity of the crossing;
- the limit value of velocity when passing through the crossing is not greater than 30 km/h.

### BRIEF DESCRIPTION OF THE DRAWINGS

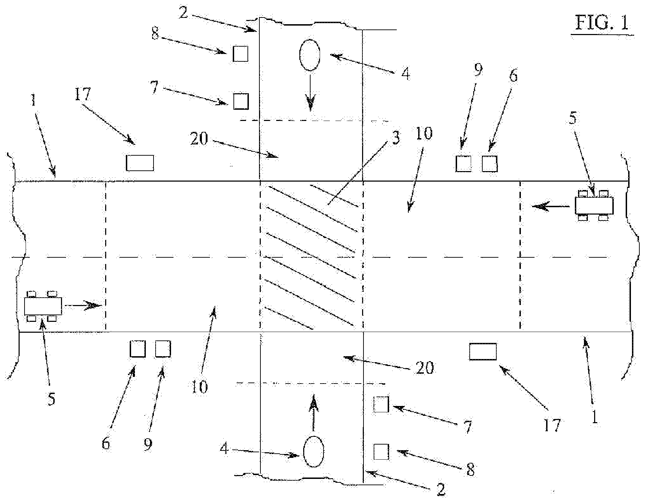

The characteristics of the invention will be described in the following in which some preferred but not exclusive embodiments are described, with reference to the appended table of drawings in which figure 1 schematically illustrates a plan view of a public road crossed by a pathway for animals in which the method of the invention operates.

### DESCRIPTION OF THE PREFERRED EMBODIMENTS

With reference to the appended table of drawings, general reference numeral 1 indicates a public road, for example extra-urban, travelled by vehicles 5 in one or two directions, reference numeral 2 denotes a pathway habitually travelled by wild animals 4 which extends prevalently into the vegetation, and reference numeral 3 denotes the crossing of the pathway 2 across the public road.

The method for regulating a transit of wild animals 4 along a crossing pathway 2 of a public road 1 comprises, in a completely novel way, the following operating steps:
a) monitoring a portion 20 of the pathway 2 in proximity of the crossing 3, for detecting presence of a wild animal 4 in proximity of the crossing 3;
b) monitoring a portion 10 of the public road 1 in proximity of the crossing 3, for detecting a presence of at least a vehicle 5 in proximity of the crossing 3 and a velocity V thereof;
c) allowing transit of the wild animal 4 detected on the crossing 3 if a vehicle 5 presence is not detected in proximity of the crossing 3 or alternatively if a presence of a vehicle 5 is detected in proximity of the crossing 3 travelling at a velocity V that is lower than a predetermined limit value V*;
d) prohibiting transit of the wild animal 4 detected in proximity of the crossing 3 if a presence is detected of a vehicle 5 in proximity of the crossing 3 having a velocity V of higher than the predetermined limit value V*.

The limit value V* of velocity for passing the crossing 3 by the vehicle 5 is established so that the vehicle 5 can slow down and/or stop in order to avoid an impact with the wild animal 4 which is arriving at the crossing 3.

It is advantageously not greater than 30 km/h.

In conditions of poor visibility (for example mist or during the night-time) it is however possible to set a limit value V* of lower velocity, for example 20 km/h.

The step d) of prohibiting transit of the wild animal 4 detected in proximity of the crossing 3 is carried out by means of acoustic dissuaders 8 located at the portion 20 of the pathway 2 in proximity of the crossing 3.

The step of monitoring a portion 10 of the public road 1 and a portion 20 of the pathway 2 in proximity of the crossing 3 can be carried out alternatively or in combination, by means of:
- volumetric sensor means, preferably of the infrared type;
- television cameras of the infrared type;
located at the respective portion 10, 20 in proximity of the crossing 3.

The volumetric sensor means can be calibrated for advantageously discriminating the detecting of the size of the wild animals 4, while the infrared television cameras can enable study and evaluation of the habits of the wild animals 4.

Reference numerals 6 and 7 denote the volumetric sensor means, and/or the television cameras, positioned respectively at the portion 10 of the public road 1 and the portion 20 of the pathway 2, in proximity of the crossing 3.

Prior to the step of enabling c) or prohibiting d) transit of the wild animal 4 detected in proximity of the crossing 3, a step e) of signalling to a driver of the vehicle 5 is included, advising as follows :a closeness of the crossing 3, a limit value V* of acceptable speed of passing the crossing 3, for example by means of signalling panels 9, possibly equipped with flashing lights.

It is also possible to include, alternatively or in combination, a step f) of signalling to the driver of the vehicle 5 a presence of a wild animal 4 in proximity of the crossing 3, again using signalling panels 9 possibly equipped with flashing lights, so as to induce the driver to slow down to below the velocity limit value V* and facilitate step c) of allowing the wild animal 4 to transit on the crossing 3.

In a preferred embodiment of the present method for regulating transit of wild animals 4, following step (e, f) of signalling to the driver of the vehicle 5, a step g) is included of prohibiting transit of the vehicle 5 on the portion 10 of the public road 1 in proximity of the crossing 3 if the velocity V of the vehicle is above the predetermined limit value V*.

Step g) of prohibiting transit of the vehicle 5 detected in proximity of the crossing 3 can be carried out, in combination or alternatively, by means of:
- first traffic signalling means,
- second automatic detecting means of the velocity V of the vehicle 5
located at the portion 10 of the public road 1 in proximity of the crossing 3.

The first traffic signalling means change to red in a case where the vehicle 5 exceeds the predetermined limit value V* notwithstanding the preceding signalling step (e, f).

The second automatic detecting means of the velocity V of the vehicle 5 have a deterrent effect and can be used for imposing penalties.

The first traffic signalling means and the second signalling means of the velocity V can be advantageously integrated in a single apparatus denoted by general reference numeral 17.

The management of the acoustic dissuaders 8, the sensor means (6, 7) and/or the television cameras, the signalling panels 9, the first traffic signalling means and the second signalling means of the velocity (17) is carried out by means of a control board arranged for example in the vegetation (not illustrated in figure 1).

From the above it is clear that the disclosed method for regulating a transit of wild animals along a crossing pathway of a public road is able to safeguard the driver of a vehicle using the public road and the wild animal using the crossing pathway.

If further enables not altering nor modifying the natural ecosystem and the animals' habits.

## Claims

1. A method for regulating a transit of wild animals along a crossing pathway of a public road, the pathway being habitually used by wild animals and meeting the public road (1) at a crossing (3), the method comprising the following steps:
a) monitoring a portion (20) of the pathway (2) in proximity of the crossing (3), for detecting a presence of a wild animal (4) in proximity of the crossing (3);
b) monitoring a portion (10) of the public road (1) in proximity of the crossing (3), for detecting a presence of at least a vehicle (5) in proximity of the crossing (3) and a velocity (V) thereof;
c) allowing transit of the wild animal (4) detected on the crossing (3) if a vehicle (5) presence is not detected in proximity of the crossing (3) or alternatively if a presence of a vehicle (5) is detected in proximity of the crossing (3) travelling at a velocity (V) that is lower than a predetermined limit value (V*);
d) prohibiting transit of the wild animal (4) detected in proximity of the crossing (3) if a presence of a vehicle (5) is detected in proximity of the crossing (3) travelling at a velocity (V) that is greater than a predetermined limit value (V*); this step of prohibiting transit of the wild animal 4 being carried out by means of acoustic dissuaders (8) located at the portion (20) of the pathway (2) in proximity of the crossing (3).

2. The method of claim 1, wherein prior to the step of enabling c) or prohibiting d) transit of the wild animal (4) detected in proximity of the crossing (3), a step (e) of signalling to a driver of the vehicle (5) is included, advising as follows:
- a closeness of the crossing (3),
- a limit value (V*) of acceptable speed of passing the crossing (3).

3. The method of one of claims from 1 to 2, wherein prior to the steps of allowing c) or prohibiting d) transit of the wild animal (4) detected in proximity of the crossing (3), a step f) is included of signalling to the driver of the vehicle (5) a presence of a wild animal (4) in proximity of the crossing (3), so as to induce the driver to slow down to below the velocity limit value (V*) and facilitate step c) of allowing the wild animal (4) to transit on the crossing (3).

4. The method of claim 2 or 3, wherein following step e) and f) of signalling to the driver of the vehicle (5), a step g) is included of prohibiting transit of the vehicle (5) on the portion (10) of the public road (1) in proximity of the crossing (3) if the velocity (V) of the vehicle is above the predetermined limit value (V*).

5. The method of claim 4, wherein the step g) of prohibiting transit of the vehicle (5) detected in proximity of the crossing (3) is carried out by means of signalling means located at the portion (10) of the public road (1) in proximity of the crossing (3).

6. The method of claim 4 or 5, wherein the step g) of prohibiting transit of the vehicle (5) detected in proximity of the crossing (3) is carried out by automatic detecting means of the velocity (V) of the vehicle (5) located at the portion (10) of the public road (1) in proximity of the crossing (3).

7. The method of one of claims from 1 to 6, wherein steps a) and b) of monitoring a portion (10, 20) of the public road (1) and the pathway (2) in proximity of the crossing (3) are carried out by volumetric sensor means, preferably of an infrared type, located at the respective portion (10, 20) in proximity of the crossing (3).

8. The method of one of claims from 1 to 7, wherein steps a) and b) of monitoring a portion (10, 20) of the public road (1) and the pathway (2) in proximity of the crossing (3) are carried out by television cameras, preferably of an infrared type, located at the respective portion (10, 20) in proximity of the crossing (3).

9. The method of one of claims from 1 to 8, wherein the limit value (V*) of velocity when passing through the crossing (3) is not greater than 30 km/h.

## Patentansprüche

1. Verfahren zur Regelung des Durchzugs von Wildtieren entlang eines Weges, der eine öffentliche Straße kreuzt, wobei der Weg gewöhnlich von Wildtieren genutzt wird und an einer Kreuzung (3) auf die öffentliche Straße (1) trifft,
wobei das Verfahren die folgenden Schritte umfasst:
a) Überwachen eines Abschnitts (20) des Weges (2) in der Nähe der Kreuzung (3), um eine Anwesenheit eines Wildtiers (4) in der Nähe der Kreuzung (3) zu erkennen;
b) Überwachen eines Abschnitts (20) der öffentlichen Straße (1) in der Nähe der Kreuzung (3), um das Vorhandensein von wenigstens einem Fahrzeug (5) in der Nähe der Kreuzung (3) und eine Geschwindigkeit (V) davon zu erkennen;
c) Zulassen des Durchzugs des Wildtiers (4), das an der Kreuzung (3) erkannt wurde, wenn kein Vorhandensein eines Fahrzeugs (5) in der Nähe der Kreuzung (3) erkannt wird, oder alternativ, wenn ein Vorhandensein eines Fahrzeugs (5) in der Nähe der Kreuzung (3) erkannt wird, das mit einer Geschwindigkeit (V) fährt, die niedriger als ein vorgegebener Grenzwert (V*) ist;
d) Unterbinden des Durchzugs des Wildtiers (4), das in der Nähe der Kreuzung (3) erkannt wurde, wenn ein Vorhandensein eines Fahrzeugs (5) in der Nähe der Kreuzung (3) erkannt wird, das mit einer Geschwindigkeit (V) fährt, die höher als ein vorgegebener Grenzwert (V*) ist; wobei dieser Schritt des Unterbindens des Durchzugs des Wildtiers (4) mittels akustischer Abwehreinrichtungen (8) ausgeführt wird, die sich am Abschnitt (20) des Weges (2) in der Nähe der Kreuzung (3) befinden.

2. Verfahren nach Anspruch 1, wobei vor dem Schritt des Zulassens c) oder Unterbindens d) des Durchzugs des Wildtiers (4), das in der Nähe der Kreuzung (3) erkannt wird, ein Schritt e) des Signalisierens an einen Fahrer des Fahrzeugs (5) eingeschlossen ist, der folgendes mitteilt:
- eine Nähe der Kreuzung (3),
- einen Grenzwert (V*) einer akzeptablen Geschwindigkeit des Passierens der Kreuzung (3).

3. Verfahren nach einem der Ansprüche 1 oder 2, wobei vor den Schritten des Zulassens c) oder Unterbindens d) des Durchzugs des Wildtiers (4), das in der Nähe der Kreuzung (3) erkannt wird, ein Schritt f) des Signalisierens der Anwesenheit eines Wildtiers (4) in der Nähe der Kreuzung (3) an den Fahrer des Fahrzeugs (5) eingeschlossen ist, um den Fahrer dazu zu veranlassen, unter den Geschwindigkeitsgrenzwert (V*) abzubremsen und den Schritt c) des Zulassens des Durchzugs des Wildtiers (4) auf der Kreuzung (3) zu ermöglichen.

4. Verfahren nach Anspruch 2 oder 3, wobei nach den Schritten e) und f) des Signalisierens an den Fahrer des Fahrzeugs (5) ein Schritt g) des Unterbindens des Vorbeifahrens des Fahrzeugs (5) auf dem Abschnitt (10) der öffentlichen Straße (1) in der Nähe der Kreuzung (3), wenn die Geschwindigkeit (V) des Fahrzeugs über dem vorgegebenen Grenzwert (V*) liegt, eingeschlossen ist.

5. Verfahren nach Anspruch 4, wobei der Schritt g) des Unterbindens des Vorbeifahrens des Fahrzeugs (5), das in der Nähe der Kreuzung (3) erkannt wird, mithilfe einer Signalisierungseinrichtung ausgeführt wird, die an dem Abschnitt (10) der öffentlichen Straße (1) in der Nähe der Kreuzung (3) angeordnet ist.

6. Verfahren nach Anspruch 4 oder 5, wobei der Schritt g) des Unterbindens des Vorbeifahrens des Fahrzeugs (5), das in der Nähe der Kreuzung (3) erkannt wird, durch eine automatische Erkennungseinrichtung für die Geschwindigkeit (V) des Fahrzeugs (5) ausgeführt wird, die an dem Abschnitt (10) der öffentlichen Straße (1) in der Nähe der Kreuzung (3) angeordnet ist.

7. Verfahren nach einem der Ansprüche 1 bis 6, wobei die Schritte a) und b) des Überwachens eines Abschnitts (10, 20) der öffentlichen Straße (1) und des Weges (2) in der Nähe der Kreuzung (3) durch Volumenmesseinrichtungen ausgeführt werden, vorzugsweise vom Infrarottyp, die an dem jeweiligen Abschnitt (10, 20) der öffentlichen Straße (1) in der Nähe der Kreuzung (3) angeordnet sind.

8. Verfahren nach einem der Ansprüche 1 bis 7, wobei die Schritte a) und b) des Überwachens eines Abschnitts (10, 20) der öffentlichen Straße (1) und des Weges (2) in der Nähe der Kreuzung (3) durch Fernsehkameras ausgeführt werden, vorzugsweise vom Infrarottyp, die an dem jeweiligen Abschnitt (10, 20) der öffentlichen Straße (1) in der Nähe der Kreuzung (3) angeordnet sind.

9. Verfahren nach einem der Ansprüche 1 bis 8, wobei der Grenzwert (V*) der Geschwindigkeit beim Passieren der Kreuzung (3) nicht höher als 30 km/h ist.

## Revendications

1. Un procédé de régulation du transit d'animaux sauvages le long d'un chemin de croisement d'une voie publique, le chemin étant habituellement utilisé par des animaux sauvages et coupant la voie publique (1) au niveau d'un croisement (3), le procédé comprenant les phases suivantes :
a) surveiller une portion (20) du chemin (2) à proximité du croisement (3), pour détecter la présence d'un animal sauvage (4) à proximité du croisement (3) ;
b) surveiller une portion (10) de la voie publique (1) à proximité du croisement (3), pour détecter la présence d'au moins un véhicule (5) à proximité du croisement (3) et une vitesse (V) de celui-ci ;
c) autoriser le transit de l'animal sauvage (4) détecté sur le croisement (3) si la présence d'un véhicule (5) n'est pas détectée à proximité du croisement (3) ou, alternativement, si la présence d'un véhicule (5) roulant à une vitesse (V) qui est inférieure à une valeur limite prédéfinie (V*) est détectée à proximité du croisement (3) ;
d) interdire le transit de l'animal sauvage (4) détecté à proximité du croisement (3) si la présence d'un véhicule (5) roulant à une vitesse (V) qui est supérieure à une valeur limite prédéfinie (V*) est détectée à proximité du croisement (3) ; ladite phase d'interdiction du transit de l'animal sauvage (4) étant effectuée par le biais d'organes de dissuasion sonore (8) situés au niveau de la portion (20) du chemin (2) à proximité du croisement (3).

2. Le procédé selon la revendication 1, dans lequel avant la phase d'autorisation c) ou d'interdiction d) du transit de l'animal sauvage (4) détecté à proximité du croisement (3), une phase e) de signalisation au conducteur du véhicule (5) est prévue, avertissant ce qui suit :
- proximité du croisement (3),
- valeur limite (V*) de vitesse acceptable pour le passage du croisement (3).

3. Le procédé selon la revendication 1 ou 2, dans lequel avant les phases d'autorisation c) ou d'interdiction (d) du transit de l'animal sauvage (4) détecté à proximité du croisement (3), une phase f) est prévue pour signaler au conducteur du véhicule (5) la présence d'un animal sauvage (4) à proximité du croisement (3), de manière à inciter le conducteur à ralentir en dessous de la valeur limite (V*) de vitesse et à favoriser la phase c) autorisant l'animal sauvage (4) à transiter sur le croisement (3).

4. Le procédé selon la revendication 2 ou 3, dans lequel après les phases e) et f) de signalisation au conducteur du véhicule (5), une phase g) est prévue pour interdire le transit du véhicule (5) sur la portion (10) de la voie publique (1) à proximité du croisement (3) si la vitesse (V) du véhicule est supérieure à la valeur limite prédéfinie (V*).

5. Le procédé selon la revendication 4, dans lequel la phase g) d'interdiction du transit du véhicule (5) détecté à proximité du croisement (3) est effectuée par le biais de moyens de signalisation situés au niveau de la portion (10) de la voie publique (1) à proximité du croisement (3) .

6. Le procédé selon la revendication 4 ou 5, dans lequel la phase g) d'interdiction du transit du véhicule (5) détecté à proximité du croisement (3) est effectuée par le biais de moyens de détection automatique de la vitesse (V) du véhicule (5) situés au niveau de la portion (10) de la voie publique (1) à proximité du croisement (3).

7. Le procédé selon l'une des revendications de 1 à 6, dans lequel les phases a) et b) de surveillance d'une portion (10, 20) de la voie publique (1) et du chemin (2) à proximité du croisement (3) sont effectuées par le biais de moyens capteurs volumétriques, de préférence de type à infrarouges, situés au niveau de la portion (10, 20) respective à proximité du croisement (3).

8. Le procédé selon l'une des revendications de 1 à 7, dans lequel les phases a) et b) de surveillance d'une portion (10, 20) de la voie publique (1) et du chemin (2) à proximité du croisement (3) sont effectuées par le biais de caméras de télévision, de préférence de type à infrarouges, situées au niveau de la portion (10, 20) respective à proximité du croisement (3).

9. Le procédé selon l'une des revendications de 1 à 8, dans lequel la valeur limite (V*) de vitesse lors de la traversée du croisement (3) n'est pas supérieure à 30 km/h.
